Europäisches Patentamt

European Patent Office

Office européen des brevets

(11) Publication number: **0 147 199**
A2

# EUROPEAN PATENT APPLICATION

(21) Application number: 84308987.1

(22) Date of filing: 20.12.84

(51) Int. Cl.⁴: **G 02 F 1/133**

(30) Priority: 23.12.83 JP 251131/83

(43) Date of publication of application:
03.07.85 Bulletin 85/27

(84) Designated Contracting States:
CH DE FR GB LI NL

(71) Applicant: Hitachi Chemical Co., Ltd.
1-1, Nishi-shinjuku 2-chome Shinjuku-ku
Tokyo 160(JP)

(72) Inventor: Yamazaki, Mitsuo Yamazaki Worksof
Hit.Chem.Co ltd.
13-1 Higashi-cho 4 chome Hitachi-shi
Ibaraki-ken(JP)

(72) Inventor: Ueda, Toyoichi Hitachi ChemicalCo. Ltd.
1-1 Nishi-Shinjuku 2-chome Shinjuku-ku
Tokyo(JP)

(72) Inventor: Sakurada, Juichi Yamazaki Worksof Hit.
Chem.Co.ltd
13-1 Higashi-cho 4 chome Hitachi-shi
Ibaraki-ken(JP)

(72) Inventor: Sato, Hidetaka Yamazaki Works of Hit. Chem.
Co.ltd
13-1 Higashi-cho 4 chome Hitachi-shi
Ibaraki-ken(JP)

(72) Inventor: Makino, Daisuke Yamazaki Works of
Hit.Chem.Co.ltd.
13-1 Higashi-cho 4 chome Hitachi-shi
Ibaraki-ken(JP)

(74) Representative: Haggart, John Pawson et al,
Page, White & Farrer 5 Plough Place New Fetter Lane
London EC4A 1HY(GB)

(54) Process and apparatus for forming an alignment surface for liquid crystal display devices.

(57) An alignment surface for liquid crystal display devices is produced by forming a uniform membrane of a solution for forming an alignment surface on an anilox roll (11) by means of a doctor roll (10) and the anilox roll (11), transferring a surface of the solution having a desired pattern, by means of a resin printing plate (2) having a definite pattern, onto a transparent substrate (5) for liquid crystal display devices and drying the resulting surface. The doctor roll (10), the anilox roll (11) and a printing cylinder (1) which carries the resin printing plate (2) are located above a stage (6) for the substrate (5).

FIG.3

## Process and apparatus for forming an alignment surface for liquid crystal display devices

This invention relates to a process and apparatus for forming an alignment surface for liquid crystal display devices.

Twist nematic (TN) electric field effect type liquid crystal display devices are known, which devices utilize the fact that when nematic liquid crystals having a positive dielectric anisotropy are aligned in the horizontal direction relative to transparent substrates for liquid crystal display devices (hereinafter referred to as transparent substrates), and the alignment direction is twisted by nearly 90° between a pair of the transparent substrates, an optical activity is imparted to the layer of the liquid crystals, and when an electric field is applied thereto, the optical activity of the liquid crystals layer is varied. Further, there are the so-called guest-host type color liquid crystal display devices which utilize the fact that when the liquid crystals obtained by mixing nematic liquid crystals having a positive dielectric anisotropy with a dichroic dyestuff and an optically active substance, or liquid crystals obtained by mixing nematic liquid crystals having a negative dielectric anisotropy with a dichroic dyestuff, or the like liquid crystals, are aligned in the perpendicular direction relative to transparent substrates and when an electric field is applied thereto, the alignment direction of the nematic liquid crystals is varied and thereby the alignment direction of the dichroic dyestuff is also varied so that color is varied in the parallel direction and the horizontal direction relative to the direction of the major axis of molecule of the dichroic dyestuff, and the like liquid crystal display elements. The alignment surface of these liquid crystal display devices functions in a state where no electric field is applied so that the liquid crystals may be uniformly aligned in the horizontal direction or the vertical direction relative to the transparent substrates, and in particular, the uniformity and stability of the alignment at that time are required.

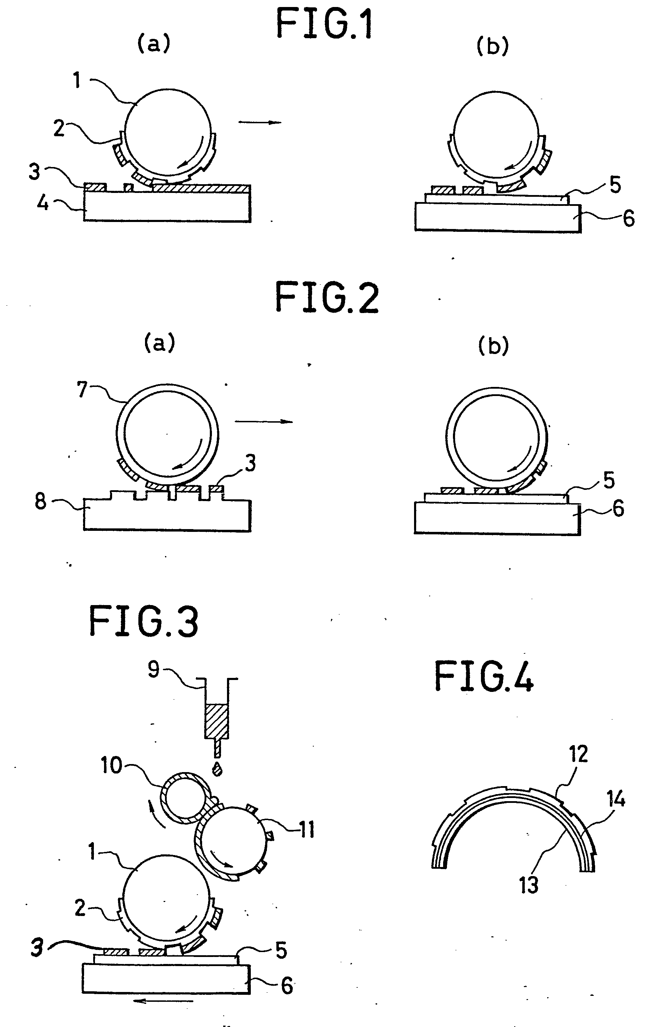

There are also processes for forming such an alignment surface, such as a process for forming a SiO$_2$ film by oblique evaporation or a process of applying a solution for forming an alignment surface such as an organic polymer solution, drying it and rubbing the resulting alignment surface, but the latter process is advantageous for the point of view of productivity and cost. In the latter process, in order to protect the sealing part of liquid crystal display devices and the terminal part of the electrodes, it is necessary to form an alignment surface having a desired pattern. Processes for forming such an alignment surface having a desired pattern, may be (1) a process of forming an organic polymer film on the whole surface of transparent substrates according to spin coating process, dip-coating process or the like process and then forming a pattern by etching according to photoresist process, printing resist process or the like process, (2) a process of masking a part needing no alignment surface with a mask, applying a solution forming an alignment surface according to spin coating, dip-coating process or the like process, removing a film of an organic polymer solution needing no alignment surface together with the mask and drying the resulting film, (3) a process of forming a film of a solution for forming an alignment surface, having a desired pattern by a printing process or the like process. Among these processes, the process of (3) is particularly advantageous in that it is simplest, superior in productivity and able to form liquid crystal display devices of low cost. A known process of forming an alignment surface by a printing process, is as shown in Figure 1a and Figure 1b of the accompanying drawings, comprising (a) first forming a film 3 of a solution for forming an alignment surface on a table 4 and (b) transferring a desired pattern onto a substrate to be printed 5 on a stage 6 by the medium of a resin printing plate 2 fixed onto a plate cylinder 1 (see Japanese Kokai Tokkyo Koho, 80 37,314/80 129,315/82 66419/83 60,729). Another known printing process is as shown in Figure 2a and Figure 2b, comprising (a) forming a film 3 of a solution for forming an alignment surface on a plate fixed table 8 having a desired pattern and (b) transferring the desired pattern onto a substrate to be printed 5 on a stage 6 through

**0147199**

the medium of a rubber blanket cylinder 7 (see Japanese Kokai Tokkyo Koho, 83 60729).

However, for the process shown in Figures 1a and 1b, equipment for applying an organic polymer solution on to the table 4, such as a roll coater, is required. Hence the construction of the apparatus for forming an alignment surface becomes complicated. Further, after transfer with the resin printing plate, there remains on the table 4 a film of a solution for forming an alignment surface in the form of a reverse pattern to that of the resin printing plate, and in advance of moving to the next transfer, it is necessary to apply a fresh solution for forming an alignment surface and form a uniform film of the solution for forming an alignment surface. There is, however, the problem that the solution for forming an alignment surface, remaining after the previous transfer, remains even after the next transfer, and hence there is also the problem that this solution is accumulated and the thickness of transferred film varies with each repetition of transfer.

Further, in the process shown in Figures 2a and 2b, since the surface of the rubber blanket cylinder has no projections and depressions, there is a problem that the film of a solution for forming an alignment surface, in the form of a pattern formed on the rubber blanket, is extended by a printing pressure under which it is transferred to a substrate to be printed, thereby reducing the accuracy of the pattern. In order to prevent this, the solution for forming an alignment surface must have a high viscosity and thixotropic properties. However, since the thickness of the alignment surface for liquid crystal display devices is usually as small as 100 - 2,000 $\overset{\mathrm{o}}{\mathrm{A}}$, the solution for forming an alignment surface, for forming such a thin film must have a reduced solids concentration and hence the viscosity is reduced. At present such solutions having thixotropic properties are very few.

A main object of the present invention is to provide a process and apparatus for forming an alignment surface for liquid crystal display devices which process has overcome the above drawbacks of the prior art and is simple in operation, superior for mass production and able to produce a high accuracy of pattern.

According to the invention there is provided a process for forming an alignment surface for a liquid crystal display device, which process comprises forming on an anilox roll by means of a doctor roll, a uniform membrane of a solution for forming an alignment surface, transferring a membrane of the solution for forming an alignment surface, having a desired pattern, by means of a printing plate having a definite pattern, onto a transparent substrate for a liquid crystal display device, and drying the resulting alignment surface.

The invention further provides apparatus for forming an alignment surface for a liquid crystal display device, comprising a doctor roll, an anilox roll and a plate cylinder having fixed thereon a resin printing plate having a definite pattern, located above a stage, wherein the anilox roll and the plate cylinder are so disposed that a uniform membrane of a solution for forming an aligned surface can be transferred from the anilox roll onto a transparent substrate for liquid crystal display devices by means of the resin printing plate on the plate cylinder.

On way of carrying out the invention is described in detail below with reference to the accompanying drawings in which:-

Figures 1a and 1b are explanatory views of a process for forming an alignment surface according to the prior art,

Figures 2a and 2b are explanatory views of another process for forming an alignment surface according to the prior art,

Figure 3 is a schematic cross-sectional view illustrating a process and apparatus of the present invention, and

Figure 4 shows a partially cross-sectional view illustrating the structure of a resin printing plate to be fixed onto a plate cylinder in carrying out the invention.

In the present invention, the stage may be movable or fixed. When the stage is movable, without moving the doctor roll, the anilox roll and the plate cylinder, the transparent substrate may be moved at a velocity in accordance with the peripheral velocity of the plate cylinder. When the stage is fixed the doctor roll, the anilox roll and the plate cylinder may be integrated and these may be moved on the transparent substrate at a velocity in accordance with the peripheral velocity of the plate cylinder.

In this case, the total length of the radius of the plate cylinder and the resin printing plate may be larger than the length between the center of the plate cylinder and the surface of the transparent substrate by up to 5mm. The velocity of movement of the transparent substrate may be equal to or less than the peripheral velocity of the plate cylinder.

Figure 3 is a schematic cross-sectional view of an apparatus of the present invention of the kind described above. A definite quantity of a solution for forming an alignment surface is dropped on the anilox roll 11 at definite intervals, and a uniform film of the solution for forming an alignment surface is formed on the anilox roll 11 by adequately adjusting the gap between the doctor roll 10 and the anilox roll 11. This film of the solution for forming an alignment surface is transferred onto a transparent substrate 5, which is on a stage 6, by means of a resin printing plate 2 fixed onto a plate cylinder 1 and dried, whereby it is possible to form an alignment surface.

The resin printing plate may be a known, optional plate such as APR printing plate. For example, as shown in Figure 4, it is possible to apply an APR printing plate 12 onto Hagback 13 (manufactured by 3 M Company) with a double-sided adhesive tape 14 and then apply the APR printing plate onto the plate cylinder 1 by the magnet of the Hagback.

As described above, according to the present invention, the solution for forming an alignment surface is transferred from the anilox roll directly onto the transparent substrate by means of the resin printing plate.  Hence a conventional table, plate fixed table and application equipment for forming a uniform film thereon, such as roll coater, are not required.  Further, merely by adjusting the gap between the doctor roll and the anilox roll, the tread pressure of the resin printing plate upon the anilox roll and the printing pressure of the resin printing plate upon the transparent substrate, a uniform alignment surface is obtained.  Also by feeding the solution for forming an alignment surface at definite intervals and always rotating the doctor roll and the anilox roll, a fresh film of the solution for forming an alignment surface is always formed on the anilox roll whereby it is possible to form an alignment surface with a high repetition accuracy.

An example of the process of the invention will now be described.

Example

The solution for forming an alignment surface was a solution of polymidoisoindroquinazolinedione (made by Hitachi Chemical Co. Ltd., hereinafter referred to as PIQ®), having a solids concentration of 6% by weight and a viscosity of 130 cps at 25°C.  The doctor roll was a butyl rubber roll (made by Kinyosha Co. Ltd.) having a diameter of 50mm and a hardness of 90°.  The anilox roll was a steel roll of diameter 100mm, having on its surface inverted pyramidal depressions of 360 mesh (depth: 20 μm), which had been subjected to super-hard chrome plating.  The plate cylinder was a chrome-plated, steel roll of diameter 150mm.  The resin printing plate was an APR (trade name of Asahi Chemical Co., Ltd.) printing plate (hardness: 70°) made by Asahi Chemical Co., Ltd., and as shown in Table 4, APR print was applied onto Magback (made by 3 M Company) with a double-sided adhesive tape and also applied onto the plate cylinder by the magnet of the Magback.  The transparent substrate was a glass plate of thickness 0.55mm, provided with a transparent electrode.

The amount of solution for forming an alignment surface dropped onto the anilox roll was about 0.2 ml per transfer, and when no transfer was carried out, it was dropped at a rate of about 0.2 ml per 2 minutes. The gap between the doctor roll and the anilox roll was made -0.2mm, that is the contact achieved by bringing the doctor roll into contact with the anilox roll, and further forced the doctor roll into the latter by 0.2mm. Whether the transfer was carried out or not, the doctor roll and the anilox roll were always each rotated at its own definite velocity, and the peripheral velocity of the doctor roll was not in accordance with that of the anilox roll. The doctor roll could be made slower than the anilox roll by a factor of about 1/4.

When the transfer was carried out, the peripheral velocities of the anilox roll, the plate cylinder and the substrate to be printed were completely in accordance at about 20 m/min. The apparent printing pressure of the print upon the transparent substrate was about $3 \ Kg/cm^2$, and the apparent tread pressure of the print upon the anilox roll was about $5 \ Kg/cm^2$.

Under the above conditions, PIQ® solution as the solution for forming an alignment surface was applied onto 100 glass plates and dried at 300°C for one hour. This made it possible to form an alignment surface with an accuracy of 800 $\pm$ 100 Å. Further, when this surface was rubbed to form a liquid crystal display device, the surface fully functioned as the surface for the liquid crystal display device.

In addition, the stage was moved in this Example, but it is also possible to fix the stage and integrate the doctor roll, the anilox roll and the plate cylinder and move these in the printing direction. Further good results can be obtained when the process uses solutions for forming an alignment surface other than PIQ solution.

Claims

1.    A process for forming an alignment surface for a liquid crystal display device, which process comprises forming on an anilox roll by means of a doctor roll, a uniform membrane of a solution for forming an alignment surface, transferring a membrane of the solution for forming an alignment surface, having a desired pattern, by means of a printing plate having a definite patten, onto a transparent substrate for a liquid crystal display device, and drying the resulting alignment surface.

2.    An apparatus for forming an alignment surface for a liquid crystal display device, comprising a doctor roll (10), an anilox roll (11) and a plate cylinder (1) having fixed thereon a resin printing plate (2) having a definite pattern, located above a stage (6), wherein the anilox roll (11) and the plate cylinder (1) are so disposed that a uniform membrane of a solution for forming an aligned surface can be transferred from the anilox roll onto a transparent substrate (5) for liquid crystal display devices by means of the resin printing plate (2) on the plate cylinder (1).

3.    An apparatus as claimed in Claim 2, wherein the stage (6) is movable, the doctor roll (10), the anilox roll (11) and the plate cylinder (1) are not moved, and the transparent substrate (5) is moved at a rate equal to or less than the peripheral velocity of the plate cylinder (1).

4.    An apparatus as claimed in Claim 2, wherein the printing stage (6) is fixed, the doctor roll (10), the anilox roll (11) and the plate cylinder (1) are integrated and moved on the transparent substrate (5) in accordance with the peripheral velocity of the printing cylinder (1).

5.    An apparatus as claimed in Claim 2, wherein the printing plate (2) consists of photo sensitive resin.

6.    Apparatus as claimed in Claim 2, wherein the resin printing plate (2) is an APR printing plate.

7.    An apparatus as claimed in Claim 2, wherein the resin printing plate (12) is applied onto Magback (13) with a double-sided adhesive tape (14) and also applied onto the printing cylinder (1) by the magnet of said Magback (13).

0147199

FIG.1

(a)

(b)

FIG.2

(a)

(b)

FIG.3

FIG.4